# EUROPÄISCHE PATENTSCHRIFT

(11) **EP 1 737 990 B1**
(45) Veröffentlichungstag und Bekanntmachung des Hinweises auf die Patenterteilung: **02.12.2009**
(21) Anmeldenummer: 05730013.9
(22) Anmeldetag: 11.03.2005
(51) Int. Cl.: C22B 21/00

(54) **VERFAHREN ZUM VERHINDERN BZW. MINIMIEREN DES ABBRANDS VON ALUMINIUM- UND/ODER ALUMINIUMLEGIERUNGSKRÄTZEN**
PROCESS FOR PREVENTING OR MINIMIZING THE MELTING LOSS OF ALUMINUM DROSSES AND/OR ALUMINUM ALLOY DROSSES
PROCÉDÉ POUR EMPECHER OU MINIMISER LA PERTE AU FEU DE ROGNURES D'ALUMINIUM ET/OU D'ALLIAGE D'ALUMINIUM

(30) Priorität: 20.04.2004 DE 102004019746
(43) Veröffentlichungstag der Anmeldung: 03.01.2007
(73) Patentinhaber: Karl Konzelmann Metallschmelzwerke GmbH & Co. Kg, 30179 Hannover (DE)
(72) Erfinder: BOIN, Udo, 61440 Oberursel (DE); PROBST, Thomas, 30826 Garbsen (DE); URBACH, Ralf, Dr. Ing., 21684 Stade (DE)
(74) Vertreter: Gerber, Wolfram
(86) Internationale Anmeldenummer: PCT/EP2005/002644
(87) Internationale Veröffentlichungsnummer: WO 2005/106054

(56) Entgegenhaltungen:
- DE-A1- 3 040 718
- DE-A1- 19 834 408
- FR-A- 2 767 580
- US-A- 4 394 978
- US-A- 4 842 255
- US-A- 5 599 379
- M.B. TAYLOR AND D. GAGNON: "The Inert Gas Dross Cooler" CONFERENCE : LIGHT METALS, 1995, Seiten 819-822, XP009048383 LAS VEGAS NV
- PATENT ABSTRACTS OF JAPAN Bd. 2000, Nr. 16, 8. Mai 2001 (2001-05-08) & JP 2001 020020 A (DAIDO STEEL CO LTD), 23. Januar 2001 (2001-01-23)

## Beschreibung

Die vorliegende Erfindung betrifft einen Verfahren zum verhindern bzw. Minimieren des Abbrands von Aluminium- und/oder Aluminiumlegierungskrätzen.

Unter Krätze werden die Abbrandprodukte verstanden, vor allem unlösliche Oxide des Aluminiums und seiner Legierungsbestandteile, die sich beim Schmelzen des Metalls auf der Schmelzbadoberfläche bilden. Unmittelbar vor dem Abgießen des Metalls wird diese Krätze mechanisch von der Schmelzbadoberfläche entfernt, da zur Erzielung von einwandfreiem Guss keine Oxidpartikel in das Gussstück gelangen darf. Die separierte Krätze wird wegen ihres hohen Gehaltes an wertvollem freiem Metall in Behältern gesammelt. Da die Krätze bei der Temperatur des Schmelzbades (700 - 800 °C) abgezogen wird, laufen an ihrer Oberfläche im Kontakt zur Umgebungsluft bis zum Erkalten relativ heftige Oxidationsreaktionen mit Luftsauerstoff ab, die den Gehalt der Krätze an freiem Metall herabsetzen. Dieser

Oxidationsvorgang vernichtet Metall, das die Recycling Quote des Aluminium verringert. Gleichzeitig werden die Kosten der Krätzeaufbereitung bezogen auf die zurückgewonnene Tonne Metall erhöht. Krätzen mit relativ hohen Konzentrationen an freiem Metall erzielen deshalb auf den Märkten höhere Preise als stärker oxidierte Krätzen. Die Anstrengungen in der Krätzebehandlung haben sich deshalb seit jeher darauf konzentriert, die Oxidationsreaktion der heißen Krätze mit Luftsauerstoff zu kontrollieren und soweit wie möglich einzuschränken.

Die Kontrolle und Einschränkung von Oxidationsreaktionen mit Luftsauerstoff durch geeignete physikalische und chemische Methoden wird allgemein als Löschvorgang bezeichnet. Die vier sogenannten Hauptlöscheffekte sind dabei der Verdünnungseffekt, der Kühleffekt, der Stickeffekt und der antikatalytische Effekt. (L. Scheichl, Brandlehre und chemischer Brandschutz, 2.A. Heidelberg 1958, S. 243.)

Der Stickeffekt ist dabei der einfachste und am längsten bekannte und verwertete und wirkt in der Weise, dass dem Luftsauerstoff der Zutritt zu dem Brandstoff ganz oder teilweise verwehrt wird. Die kann dadurch geschehen, dass ein Löschmittel in Form einer Gas-, Dampf-, Nebel- oder Staubwolke, unter Umständen auch als Kruste oder Schaumschicht den Brandstoff mehr oder weniger kompakt einhüllt. Im Handbuch der Feuer- und Explosionsgefahr, 6.A. München 1965, S. 296, wird beschrieben, dass zur Kontrolle von Ölbränden in der eisenerzeugenden Industrie für die Ölbehälter Deckel vorzusehen sind, die bei Entzündung des Inhaltes sofort heruntergelassen bzw. geschlossen werden können.

Zur Beschränkung der Oberflächenoxidation glühenden oder flüssigen Metalls oder Metallkrätze mit solchen Metallinhalten sind verschiedene Vorrichtungen und Verfahren bekannt.

Durch die DE 44 26 596 ist eine Vorrichtung zur Einführung eines abdeckenden Mediums auf die Oberfläche eines Bades einer Metallschmelze bekannt. Mittels der Vorrichtung wird ein Medium, insbesondere ein Kältemittel, auf die Oberfläche eines Bades einer Metallschmelze geleitet. Durch das Medium soll der Abschluss der Oberfläche des Bades der Metallschmelze gegenüber der atmosphärischen Luft erreicht werden, um eine Schlackebildung zu verhindern. Dabei kann das abdeckende Medium z.B. ein Inertgas sein.

Aus der DE 6 67 060 sowie der DE 198 34 408 und "The Inert Gas Dross Cooler", M.B. Taylor and D. Gagnon: Conference-hight Metals, 1995, p. 819-822 sind geschlossene Behälter bekannt, in die ein Schutzgas eingeführt wird. Die Zuführung eines zu schmelzendes Metalls in den Behälter erfolgt dabei mittels einer Schleuse. Den Vorrichtungen ist gemein, dass nicht die Oxidation des Metalls verhindert, sondern lediglich die Schlackenbildung reduziert werden soll.

Zur Einschränkung der Oberflächenoxidation glühender Metallkrätze ist aus der DE-OS 2553455 bekannt, eine Glocke über einen in einer wassergefüllten Wanne stehenden Betonsockel zu stülpen, auf dem ein flacher Behälter zur Aufnahme der Krätze angeordnet ist. Die Metallglocke wird derart über die glühende Krätze abgesenkt, dass die Auflagestellen im Wasser der Wanne stehen, und deshalb freien Niveauausgleich des Wassers innerhalb der Glocke gestatten. Damit befindet sich die Krätze in einer pneumatischen Wanne, deren Gasraum trotz sinkendem Volumen infolge Sauerstoffverbrauchs dicht abgeschlossen ist. Der Metallinhalt der glühenden Krätze wird durch den in der Glocke befindlichen Luftsauerstoff an der Oberfläche oxidiert, bis der Sauerstoffmangel den Brand erstickt.

Nachteilig bei dem zuvor beschriebenen Stand der Technik ist, dass die Glocke im Verhältnis zum Behälter für die Aufnahme der glühenden Krätze relativ groß ist, so dass das Luftvolumen unverhältnismäßig groß und somit der Oxidationsprozess bis zum Ersticken des Brandes lange andauert, wodurch wertvolles Metall vernichtet wird. Zudem ist ein Transport des durch die Glocke verschlossenen Behälters wenn überhaupt nur im begrenzten Umfang möglich.

Aufgabe der vorliegenden Erfindung ist es, ein Verfahren zum Verhindern bzw. Minimieren des Abbrands von Aluminium- und/oder Aluminiumlegierungskrätzen bereitzustellen, der den Abbrand des Metalls möglichst rasch und dauerhaft erstickt und zudem einen Transport der noch heißen Krätze ermöglicht.

Eine weitere Aufgabe der vorliegenden Erfindung ist die weitgehende Verhinderung der diffusen Emissionen, die mit einem offenen Krätzebrand verbunden sind. Die exotherme Oxidation des Aluminium-Metalls bewirkt lokal Temperaturen nahe 2000 °C, wodurch verschiedenste Verbindungen, die in der Krätze vorliegen können, verdampfen oder sich in Kontakt mit Luft chemisch zu ggf. problematischen Gaskomponenten umsetzen. Die vorliegende Erfindung bewirkt eine völlige Kapselung der heißen Krätze, wodurch die beschriebenen Emissionen an die umgebende Arbeitsatmosphäre unterbunden werden.

Diese Aufgaben werden erfindungsgemäß mit einem Verfahren mit den Merkmalen des Anspruchs 1 gelöst. Weitere vorteilhafte Ausgestaltungen des Verfahrens gem. Anspruch 1 ergeben sich durch die Merkmale der auf den Anspruch 1 rückbezogenen Unteransprüche.

Der der Erfindung zugrundeliegende Erfindungsgedanke beinhaltet, dass das Luftvolumen oberhalb der heißen Krätze möglichst klein gehalten werden soll. In diesem Fall ist ein Löschen bzw. Ersticken des Krätzebrandes mittels eines teueren Inertgases nicht mehr notwendig. Zudem reduziert sich der technische Aufwand des erfindungsgemäßen Behälters gegenüber einer Vorrichtung mit der Möglichkeit zur Einleitung eines Inertgases erheblich. Durch das Aufsetzen des Deckels direkt auf die Begrenzungswandung des die Krätze aufnehmenden insbesondere wannenförmigen Krätzebehältnisses ergibt sich vorteilhaft ein minimales Luftvolumen oberhalb der Krätze, welches sich vorteilhaft infolge des Verbrauchs des Luftsauerstoffs weiter reduziert und somit einen Unterdruck im Behälter erzeugt. Der Unterdruck erzeugt eine Kraft, die die Dichtung zwischen Deckel und Behälter Unterteil zusammendrückt und für eine gute Dichtfunktion sorgt.

Durch den bestehenden Unterdruck wird der Deckel bis zum Abkühlen unterhalb einer kritischen Temperatur von ca. 400 - 450 °C, bei der Aluminium-Metall nicht mehr nennenswert oxidiert, geschützt. Als Dichtmaterial ist ein Material zu wählen, welches den auftretenden hohen Temperaturen zumindest bis zu dem Zeitpunkt standhält, bis die kritische Temperatur unterschritten ist.

Die Dichtung liegt vorteilhaft in einer Nut des Deckels ein, so dass sie mit dem Deckel auf das Unterteil aufgesetzt werden kann. Die Dichtung kann aber auch als separates Teil zwischen den sich auf das Unterteil absenkten Deckel gelegt bzw. platziert werden.

Der mittels des Deckels verschlossene Behälter mit der noch heißen Krätze kann problemlos zur Krätzeaufbereitung transportiert werden, ohne die Abkühlung der Krätze abzuwarten.

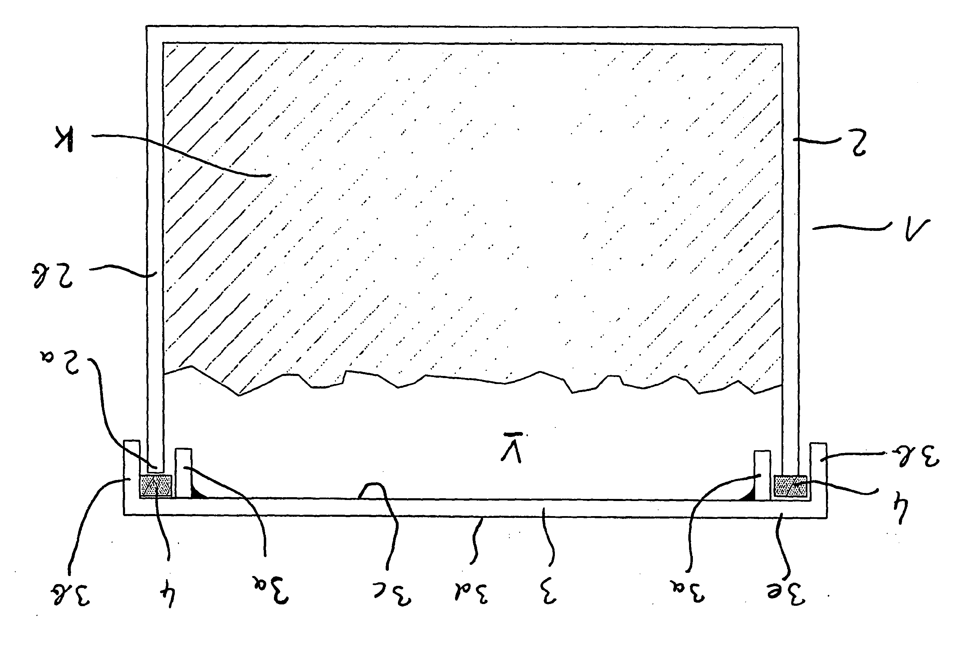

Die Zeichnung zeigt eine mögliche Ausgestaltung des erfindungsgemäß verwendeten Behälters 1. Der Behälter 1 besteht aus einem wannenförmigen Unterteil 2, auf das der Deckel 3 aufsetzbar ist. Der Deckel 3 ist im wesentlichen flach ausgebildet und hat an seiner unteren Seite zwei umlaufende, parallel zueinander angeordnete Kragen 3a und 3b, zwischen denen die Dichtung 4 einliegt. Der Kragen 3a befindet sich beim verschlossenen Behälter innerhalb und der Kragen 3b befindet sich außerhalb des Behälters. Hierdurch ist gewährleistet, dass der Deckel 3 seitlich gehalten ist. Durch den entstehenden Unterdruck infolge der nur kurz andauernden Oxidation der Krätze K im Behälter 1 wird der Deckel 3 gegen die Stirnseite 2a der Wandung 2b des Unterteils 2 gedrückt, wodurch die Dichtung 4 den Behälter insbesondere weitgehend gasdicht und vollkommen staubdicht verschließt. Das Luftvolumen V oberhalb der Krätze K ist vergleichsweise klein, wodurch der Krätzebrand nach kurzer Zeit erlischt.

Das Material der Dichtung 4 kann so gewählt sein, dass die Dichtung 4 dauerhaft den Behälter 1 gasdicht verschließt. In diesem Falle muss eine relativ hohe Kraft aufgebracht werden, um den Behälter zu öffnen, sofern nicht ein Ventil zum Druckausgleich vorgesehen wird. Das Dichtungsmaterial kann aber auch derart gewählt werden, dass die Dichtfunktion nach einem Zeitintervall nachlässt. Dabei muss das Zeitintervall so groß sein, dass bei Nachlassen der Dichtfunktion die oben beschriebene kritische Temperatur bereits unterschritten ist.

## Patentansprüche

1. Verfahren zum Abkühlen von Aluminiumkrätze, Magnesiumkrätze und anderen Carbo-thermisch nicht reduzierbaren Nichteisenmetallen, mit einem Behälter der aus einem wannenartigen Unterteil (2) zur Aufnahme der heißen Krätze (k) und einem Deckel (3) besteht, wobei eine Dichtung (4) zwischen der Stirnseite (2a) der seitlichen Wandung (2b) des Unterteils (2) und der Unterseite (3c) des Deckels (3) in verschlossenem Zustand des Behälters (1) einliegt und den Behälter (1) abschließt, wobei in einem ersten Verfahrensschritt die heiße Krätze (k) in das Unterteil (2) des Behälters bei geöffnetem Deckel (3) eingebracht wird, und dass anschließend der Deckel (3) mit daran befestigter oder einliegender Dichtung (4) auf das Unterteil (2) abdichtend aufgesetzt wird, wodurch kurz nach dem Verschliessen des Behältnisses durch die Oxidation von freiem Metall der oberhalb der Krätze (k) befindliche Sauerstoff aufgebraucht wird, wobei hierdurch ein Unterdruck entsteht, welcher den Deckel gegen das Unterteil drückt und somit die Dichtung des Behälters zumindest solange gasdicht abdichtet, bis die Krätze eine kritische Temperatur unterschritten hat.

2. Verfahren nach Anspruch 1, **dadurch gekennzeichnet, dass** die Dichtung (4) zumindest über einen weiten Bereich des Abkühlzeitraums der Krätze (K) temperaturbeständig ist und abdichtet.

3. Verfahren nach Anspruch 1 oder 2, **dadurch gekennzeichnet, dass** der Deckel (3) aufliegt bzw. mittels eines Verschlusses, insbesondere eines Schraubverschlusses am Unterteil (2) befestigbar ist.

4. Verfahren nach einem der vorhergehenden Ansprüche, **dadurch gekennzeichnet, dass** der Deckel (3) einen mittleren im wesentlichen flachen Bereich (3d) aufweist, wobei an seinem äußeren Rand (3e) zwei in Richtung des Unterteils (2) gerichtete insbesondere umlaufende und parallel zueinander angeordnete Vorsprünge (3a, 3b) angeformt oder befestigt sind, und dass die Dichtung (4) zwischen den Vorsprüngen (3a, 3b) einliegt.

5. Verfahren nach einem der vorhergehenden Ansprüche, **dadurch gekennzeichnet, dass** die Dichtung (4) während des Abkühlprozesses der Krätze (K) ihre Dichtfunktion ganz oder teilweise aufgrund ihrer Materialeigenschaft behält.

6. Verfahren nach einem der vorhergehenden Ansprüche, **dadurch gekennzeiehnet**, dass das Behältnis ein Ventil zum Druckausgleich nach dem Abkühlvorgang hat.

7. Verfahren nach Anspruch 6 **dadurch gekennzeichnet, dass** der Druckausgleich durch Umgebungsluft oder durch Inertgas erfolgt.

8. Verfahren nach einem der vorhergehenden Ansprüche, **dadurch gekennzeichnet, dass** an dem Behälter Befestigungsmittel zum Transport des Behälters mit darin befindlicher Krätze angeordnet oder befestigbar sind.

9. Verfahren nach einem der vorhergehenden Ansprüche, **dadurch gekennzeichnet, dass** der Deckel (3) und das Unterteil (2) aus einem Material sind, das gegen heiße Nichteisenmetall-Krätzen beständig ist.

## Claims

1. Process for cooling aluminium dross, magnesium dross and other nonferrous metals which are not carbothermally reducible, comprising a vessel consisting of a trough-like bottom part (2) for receiving the hot dross (K) therein and a lid (3), wherein a gasket (4) lies between the front face (2a) of the side wall (2b) of the bottom part (2) and the underside (3c) of the lid (3) in the closed state of the vessel (1) and closes the vessel (1), wherein, in a first process step, the hot dross (K) is introduced into the bottom part (2) of the vessel while the lid (3) is open, and that then, the lid (3), with the gasket (4) being attached thereon or lying therein, is placed sealingly on the bottom part (2), whereby the oxygen located above the dross (K) is consumed due to the oxidation of free metal shortly after the vessel is closed, whereby a negative pressure is created which presses the lid against the bottom part, so that the gasket seals the vessel in a gas-tight manner at least until the dross has dropped below a critical temperature.

2. Process according to claim 1, **characterised in that** the gasket (4) is temperature-resistant and seals at least over a large part of the cooling time of the dross (K).

3. Process according to claim 1 or 2, **characterised in that** the lid (3) rests on or is attachable to the bottom part (2) by means of a closure, in particular a threaded closure.

4. Process according to one of the preceding claims, **characterised in that** the lid (3) has a central, in particular flat area (3d), with two projections (3a, 3b), which are oriented in the direction of the bottom part (2), and, in particular, extend peripherally and are disposed parallel relative to each other, being formed onto or attached to the outer edge (3e) thereof (3d), and that the gasket (4) lies in between the projections (3a, 3b).

5. Process according to one of the preceding claims, **characterised in that**, during the cooling process of the dross (K), the gasket (4) retains its sealing function completely or partially due to its material property.

6. Process according to one of the preceding claims, **characterised in that** the vessel comprises a valve for pressure equalisation after the cooling process.

7. Process according to claim 6, **characterised in that** the pressure equalisation is effected by ambient air or by inert gas.

8. Process according to one of the preceding claims, **characterised in that** fastening means are disposed on or attachable to the vessel, for transporting the vessel with dross located therein.

9. Process according to one of the preceding claims, **characterised in that** the lid (3) and the bottom part (2) consist of a material which is resistant to hot nonferrous metal dross.

## Revendications

1. Procédé de refroidissement de rognures d'aluminium, de rognures de magnésium et d'autres métaux non ferreux irréductibles du point de vue carbothermique, avec un conteneur qui se compose d'une partie inférieure (2) en forme de cuve servant à recevoir les rognures chaudes (K) et d'un couvercle (3), un joint (4) étant inséré entre le côté frontal (2a) de la paroi latérale (2b) de la partie inférieure (2) et le côté inférieur (3c) du couvercle (3) lorsque le conteneur (1) est à l'état fermé et fermant le conteneur (1), dans lequel dans une première étape de procédé, les rognures chaudes (K) sont introduites dans la partie inférieure (2) du conteneur, le couvercle (3) étant ouvert, et dans lequel le couvercle (3) avec le joint (4) qui y est fixé ou inséré est ensuite posé sur la partie inférieure (2) de manière étanche, ce par quoi l'oxygène se trouvant au-dessus des rognures (K) est consommé par l'oxydation du métal libre peu de temps après la fermeture du conteneur, produisant une sous-pression qui pousse le couvercle contre la partie inférieure et ainsi le joint étanche le conteneur de manière étanche au gaz au moins jusqu'à ce que la température des rognures est passée sous une température critique.

2. Procédé selon la revendication 1, **caractérisé en ce que** le joint (4) présente une résistance thermique au moins sur une grande plage de la période de refroidissement des rognures (K) et rend étanche.

3. Procédé selon la revendication 1 ou 2, **caractérisé en ce que** le couvercle (3) repose et/ou peut être fixé au moyen d'une fermeture, en particulier d'une fermeture à vis, sur la partie inférieure (2).

4. Procédé selon l'une quelconque des revendications précédentes, **caractérisé en ce que** le couvercle (3) présente une zone (3d) médiane essentiellement plane, deux saillies (3a, 3b) orientées dans la direction de la partie inférieure (2) en particulier périphériques et agencées parallèlement l'une à l'autre étant moulées ou fixées au niveau de son bord extérieur (3e) et **en ce que** le joint (4) est inséré entre les saillies (3a, 3b).

5. Procédé selon l'une quelconque des revendications précédentes, **caractérisé en ce que** pendant le processus de refroidissement des rognures (K), le joint (4) conserve sa fonction d'étanchéité en totalité ou en partie en raison de la propriété de son matériau.

6. Procédé selon l'une quelconque des revendications précédentes, **caractérisé en ce que** le conteneur présente une soupape servant à compenser la pression après le refroidissement.

7. Procédé selon la revendication 6, **caractérisé en ce que** la compensation de pression se fait par l'air ambiant ou par gaz inerte.

8. Procédé selon l'une quelconque des revendications précédentes, **caractérisé en ce que** des moyens de fixation sont agencés ou peuvent être fixés au niveau du conteneur pour le transport du conteneur contenant des rognures.

9. Procédé selon l'une quelconque des revendications précédentes, **caractérisé en ce que** le couvercle (3) et la partie inférieure (2) sont en un même matériau qui résiste aux rognures chaudes en métaux non ferreux.
